# EUROPEAN PATENT SPECIFICATION

(11) **EP 1 374 796 B1**
(45) Date of publication and mention of the grant of the patent: **02.05.2007**
(21) Application number: 03013586.7
(22) Date of filing: 14.06.2003
(51) Int. Cl.: A61C 8/00

(54) **Dental implant**
Zahnimplantat
Implant dentaire

(30) Priority: 19.06.2002 IT PD20020165
(43) Date of publication of application: 02.01.2004
(73) Proprietor: Sweden & Martina S.p.a., 35020 Due Carrare (PD) (IT)
(72) Inventor: Martina, Alberto, 35020 Due Carrare (PD) (IT)
(74) Representative: Gustorf, Gerhard

(56) References cited:
- WO-A-03/059187
- US-A- 5 199 873
- US-A- 5 427 527

## Description

The present invention relates to a dental implant as set forth in the preamble of claim 1. Such an implant is known from US-A 5 427 527.

### State of the art

The patent EP 438048 describes a dental implant comprising a fixture suitable for being inserted in the hole, divided into two or more parts, where each upper section has a larger diameter than the segment below it; the tip of the thread on the lower segment has the same diameter as the groove of the thread on the segment above it, and the various segments have the same length. This solution does not involve a differentiated biological treatment in relation to the different tissues affected by the implant. Moreover, this solution does not require a particular distribution of the spaces in order to facilitate different contacts between clot and bone.

The patent EP 424 734 describes a conical implant divided into two parts, each one provided with thread having different pitch, wherein the apical portion, particularly narrow, is suitable for being screwed into the lower cortical layer of the bone.

The patent US 5 000 686 describes a dental implant divided into two parts, a conical part in the winged portion and a cylindrical part in the apical portion, both provided with thread with constant pitch.

### Description of the invention

The aim of the invention is to facilitate a rapid healing and, at the same time, enable the perfect insertion of the fixture and its secure anchorage without causing trauma to the patient.

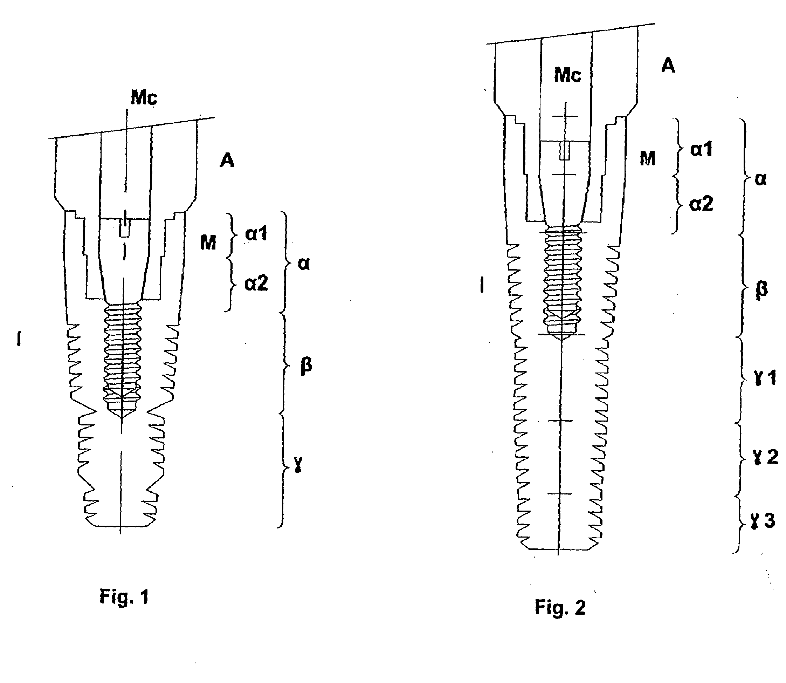

From a general point of view, the new dental implant has a variable conical shape that makes it very similar to the roots of natural teeth. Its features will be highlighted in greater detail below with reference to the attached drawing, which is only an illustrative and not restrictive example.

Generally speaking, the new implant can be divided into two segments or portions, i.e. coronal (α), medial (β) and apical (γ), if any.

The first few millimeters of the coronal portion (α) have a cylindrical profile. These first few millimeters (α1) are characterized in that they are polished with a sinusoidal trend, the upper portions coincide with the buccal and palatal regions and the lower portions coincide with the medial and distal regions.

The purpose of this profile is to follow the trend of the dental ridge, both during the insertion and in the subsequent phase of healing and functional and biological remodeling of the bone that is loaded.

At the same time, this shape facilitates the achievement of the biological size that is essential to the physiology of the peri-implant soft tissues.

The straw yellow gold color of the surface on the polished neck has a favorable influence on the peri-implant tissues, optimizing the camouflage of the reconstruction.

The implant profile returns from conical to cylindrical in its cervical portion to help maintain greater thicknesses of both the bone and the soft tissues, and in the initial phase this facilitates contact with the clot. Having an adequate tissue thickness around the top of the implant (resembling that of the adjacent natural teeth as far as possible) favors its long-term stability.

This shape also facilitates the formation of a micro-gap between the implant bed and the fixture in the vicinity of the top of the implant.

This gap will make it easier for the space to be filled by the clot, thereby promoting a healing process that is better and also shorter, generally taking about two weeks less.

This insertion protocol reduces the amount of stress in the coronal area of the dental ridge (especially in the case of slender dental ridges) which can be one of the causes of resorption and recession.

At the same time, it is important to bear in mind that this stress and/or compression normally comes to bear on the spongy tissue, which is the most important bone tissue in the repair processes because of its rapid revascularization rate.

Below the first cylindrical portion (α1), there is another, slightly conical portion (α2) with an unthreaded surface that, by comparison with other stepping systems available on the market, makes it easier to insert the implant in its bone bed, again preventing a point of stress/compression on the socket and also succeeding in preserving a greater proportion of bone marrow.

Containing these areas of compression on the bone at the bone-implant interface reduces the surgical injury and increases the repair rate.

The **medial portion** (β) has a conical core and a tapered thread.

The thread is apical side cut at a 90° angle with respect to the long axis of the fixture.

The side facing towards the coronal region lies at a 45° angle to the central axis.

This portion of the thread improves the dissipation of the normal forces with respect to the tensile loads and also reduces the shadow area, a characteristic of which is that it reduces bone mineralization in the area it affects.

This segment is tapered, and the tapered thread characterizing the implant begins in this portion.

The combination of the conical shape both of the core and of the tip on either side of the core means that the maximum stress is concentrated in this portion at the time of insertion. This central portion of the implant is always responsible for primary stabilization in the surgical socket.

With this system, therefore, primary stabilization is shifted from the apical and coronal corticals (the concept of bicorticalism) to the centro-coronal medullary position of the bone structure being treated.

The implant will consequently be stabilized in the spongy tissue, using both the medullary structure underneath the coronal cortical portion, where it normally accounts for a greater percentage (buccolingual aspect), and the centro-coronal medullary portion of the bone structure being treated (mesiodistal aspect). Clearly, the concept is exactly the opposite of the bicortical implant stabilization concept.

In fact, while the former, described above, focuses on stabilizing the implant within the most vascularized structure, in the latter (bicorticalism) stabilization is sought in a scarcely-vascularized region with a very low potential for revascularization.

When the implant has to be inserted between natural teeth, the advantage of this mesiodistal profile over a cylindrical implant is considerable and will prove even more advantageous in the treatment of patients who have had orthodontic treatment, where the root orientation of the adjacent natural teeth has been altered.

The implant may present an apical portion (γ) that comprises one or more parts provided with thread with cores whose alignment is parallel or divergent to the alignment of the ridges.

Said parts are conical or cylindrical, with the characteristic of being arranged alternately, so that each cylindrical part has conical parts at its sides and each conical part has cylindrical parts at its sides.

Here again, the thread is asymmetrical, with the apical side cut at a 90° angle to the long axis of the implant, while the side facing the coronal region is at a 45° angle to the central axis.

This particular, innovative portion of the thread improves the dissipation of the normal forces with respect to the tensile stresses and also reduces the shadow zone, a characteristic of which is that it reduces bone mineralization in the area it affects.

The apical portion is smaller than the more coronal parts because it has been unanimously acknowledged that the functional stress in osseo-integrated implants is concentrated in the top, dental ridge region.

This shape reduces the removal of spongy bone and simplifies the surgical technique, as well as adapting better to the anatomical shape of a toothless dental ridge in the vestibulo-lingual aspect and in the posterior sectors.

The aim of any difference between the profile of the tip or thread and the design of the core is to create a differentiated contact between the outer and inner surfaces of the turns.

There is an effective contact between the outer surface and the surgical socket, while the inner surface of the thread and the surface of the core will only come into contact with the clot, like the coronal cylindrical portion.

This situation promotes a different healing process between the coronal surface (which will be in contact with the clot), the medial part (where there will be a strong primary contact between the titanium surface and the bone) and the apical portion (where only a minimal surface area will achieve a primary contact between titanium and bone walls, while in most of the surface area there will be contact between implant and clot).

The initial stabilizing contact between bone surface and implant produces an initial necrosis and a subsequent bone apposition.

Contact between the titanium and the clot stimulates a primary healing of the bone on the surface of the implant.

The average healing time observed between the clot interface surface and the surgically-prepared bone interface surface (for the purposes of primary stabilization) is two weeks shorter.

The coronal aspect of the implant is characterized by a raised border that facilitates a precision interface with the abutment, also producing a clean cut of any introflected tissues.

This succeeds in improving the appearance of the peri-implant tissues. The anchorage of the abutment to the implant is in the form of a large parallel-wall hexagonal coupling with a cylindrical portion apical to the hexagon that assures a greater stability in relation to lateral loads (increasing the form of retention and resistance).

One of the drawbacks of currently-used implant systems concerns the top of the implant often being markedly vestibular.

The use of angular abutments to correct the orientation of the profile at the top of the prosthetic element depends on the height of the implant-abutment connection screw, which is generally displaced several mm above the connection.

The buccal tilt of the abutments interferes with the blood flow to the fragile peri-implant tissues, often giving rise to dehiscence and recession.

To prevent this problem, the connection screw (M) has been lowered, i.e. shifted apically (the more coronal portion of the screw coincides with the more coronal position of the implant).

This has been achieved by housing the head (Mc) of the connection screw inside the oversized hexagonal coupling system.

The clinical fallout of this solution is the opportunity to correct the profile of the top of the abutment directly from the implant connection point, safeguarding the fragile health of the peri-implant tissues and creating the right conditions for the long-term stability of the results obtained.

The thread of the grooves also has an asymmetrical design, one side being at a 90° angle to the tangent and the other at a 45° angle.

There are four grooves that are symmetrical at an angle of 180° and asymmetrical at a 90° angle.

In the insertion phase, the two clockwise-oriented grooves lend the implant a self-tapping form. In the regenerative osseo-integration phase, contact between the surface of the grooves and the clot facilitates the primary healing of the bone.

In the second surgical phase, a faster healing at the interface between the grooves and newly-formed bone and the apical portion and newly-formed bone counters any tendency for unscrewing/screwing of the healing screw and increases the torque resistance, reducing the time it takes for the implant to be ready for the application of a prosthesis.

Therefore, with reference to the above description and the attached drawing, the following claims are put forth.

## Claims

1. Dental implant with a lower part for fixing to the bone, comprising
• a coronal portion (α), with no thread, in which the first few mm have a cylindrical profile (α1) below which it becomes conical (α2),
• a threaded medial portion (β), the cores of the thread being aligned with a tapered trend,
• a connection screw (M) for fixing an abutment (A) to the fixture (I),
**characterized in that** said connection screw (M) is positioned so that the most coronal part (Mc) of the connection screw (M) is housed inside the coronal portion (α) of the fixture (I) such that it does not extend beyond said coronal portion (α).

2. Dental implant according to claim 1, **characterized in that** it comprises an apical portion (γ) that may be conical or cylindrical.

3. Dental implant according to claim 1, **characterized in that** it comprises two ore more apical cylindrical or conical portions (γ₁, γ₂, γ₃,..), wherein said portions are positioned alternately.

4. Dental implant according to any of the preceding claims, **characterized in that** the line joining the thread ridges is parallel to the line joining the cores.

5. Dental implant according to any of claims 2 to 4, **characterized in that** the ratio of surface area not destined to come directly in primary contact with the bone to the surface area destined to come in direct primary contact with the bone is greater in the apical part (γ) than in the medial portion (β).

6. Dental implant according to any of the preceding claims, **characterized in that** the coronal portion (α) has a non-uniform polish with a higher profile in the buccal and palatal regions and a lower profile in the medial and distal regions.

## Patentansprüche

1. Zahnimplantat mit einem unteren, im Knochen zu fixierenden Teil, umfassend
- einen koronalen, gewindefreien Abschnitt (α), von dem die ersten wenigen Millimeter ein zylindrisches Profil (α1) haben, auf das nach unten ein konisches Profil (α2) folgt,
- einen mittleren Gewindeabschnitt (β), dessen Gewindekerne auf einem Konus liegen,
- eine Verbindungsschraube (M) zur Befestigung eines Abutments (A) am Implantat (I), **dadurch gekennzeichnet, daß** die Verbindungsschraube (M) so angebracht ist, daß der koronal äußere Teil (Mc) der Befestigungsschraube (M) innerhalb des koronalen Abschnitts (α) des Implantats (I) liegt, so daß er nicht über diesen koronalen Abschnitt (α) vorsteht.

2. Zahnimplantat nach Anspruch 1, **dadurch gekennzeichnet, daß** dieses einen apikalen Abschnitt (γ) hat, der konisch oder zylindrisch ist.

3. Zahnimplantat nach Anspruch 1, **dadurch gekennzeichnet, daß** dieses zwei oder mehr apikale Abschnitte (γ1, γ2, γ3, ...) zylindrischer oder konischer Form hat, welche alternierend angeordnet sind.

4. Zahnimplantat nach einem der vorhergehenden Ansprüche, **dadurch gekennzeichnet, daß** die Verbindungslinie der Gewindespitzen parallel zur Linie verläuft, die die Gewindekerne miteinander verbindet.

5. Zahnimplantat nach einem der Ansprüche 2 bis 4, **dadurch gekennzeichnet, daß** das Verhältnis zwischen der Oberfläche, die nicht unmittelbar in Primärkontakt mit dem Knochen kommt, und der Oberfläche, die unmittelbar in Primärkontakt mit dem Knochen kommt, im apikalen Abschnitt (γ) größer als im medialen Abschnitt (β) ist.

6. Zahnimplantat nach einem der vorhergehenden Ansprüche, **dadurch gekennzeichnet, daß** der koronale Abschnitt (α) eine nicht gleichmäßige Glätte hat, die in den oralen und palatalen Zonen ein höheres Profil hat, während das Profil in den medialen und distalen Zonen niedriger ist.

## Revendications

1. Implant dentaire avec une partie inférieure apte à être fixée dans l'os, comprenant
- un tronçon coronal (α) non fileté, dont les premiers millimètres présentent un profil cylindrique (α1) suivi vers le bas d'un profil conique (α2),
- un tronçon médian fileté (β), dont les fonds de filet sont alignés sur un cône,
- une vis de jonction (M) pour fixer un aboutement (A) à l'implant (I),
**caractérisé par le fait que** ladite vis de jonction (M) est positionnée de telle sorte que la partie coronale extérieure (Mc) de la vis de jonction (M) soit cachée dans le tronçon coronal (α) de l'implant (I) sans faire saillie dudit tronçon coronal (α).

2. Implant dentaire selon la revendication 1, **caractérisé par le fait qu'**elle comprend un tronçon apical (γ) conique ou cylindrique.

3. Implant dentaire selon la revendication 1, **caractérisé par le fait qu'**il comprend au moins deux tronçons apicaux cylindriques et coniques (γ1, γ2, γ3, ...) alternativement positionnés.

4. Implant dentaire selon une quelconque des revendications précédentes, **caractérisé par le fait que** la ligne de jonction des sommets de filetage est parallèle à la ligne de jonction des fonds de filetage.

5. Implant dentaire selon une quelconque des revendications 2 à 4, **caractérisé par le fait que** le rapport de la surface qui ne vient pas directement en contact primaire avec l'os et de la surface destinée à venir directement en contact primaire avec l'os est plus grand dans le tronçon apical (γ) que dans le tronçon médian (β).

6. Implant dentaire selon une quelconque des revendications précédentes, **caractérisé par le fait que** le tronçon coronal (α) présente un poli non-uniforme dont le profil dans les zones orales et palatales est plut haut que dans les zones médiales et distales.
